# EUROPÄISCHE PATENTSCHRIFT

(11) **EP 1 283 969 B1**
(45) Veröffentlichungstag und Bekanntmachung des Hinweises auf die Patenterteilung: **05.10.2005**
(21) Anmeldenummer: 01913873.4
(22) Anmeldetag: 13.03.2001
(51) Int. Cl.: F16M 11/04

(54) **AUSLEGER**
EXTENSION ARM
CONSOLE

(30) Priorität: 25.05.2000 DE 10025839
(43) Veröffentlichungstag der Anmeldung: 19.02.2003
(73) Patentinhaber: Mavig GmbH, 81829 München (DE)
(72) Erfinder: KUHN, Peter, 81545 München (DE)
(74) Vertreter: Körfer, Thomas
(86) Internationale Anmeldenummer: PCT/EP2001/002811
(87) Internationale Veröffentlichungsnummer: WO 2001/090631

(56) Entgegenhaltungen:
- EP-A- 0 930 055
- DE-A- 4 321 726
- DE-U- 8 436 146
- US-A- 3 168 341
- US-A- 3 306 639

## Beschreibung

Die Erfindung betrifft einen Ausleger, insbesondere einen schwenk- und neigbaren Ausleger, für ein Trägersystem, zum aufgehängten Befestigen von vorzugsweise medizinischen Vorrichtungen, und ein Verfahren zur Montage solch einer Vorrichtung zu einem Ausleger.

Ein bekannter Ausleger besteht aus einem Horizontal- bzw. Federarm, der an einer vorzugsweise an der Decke eines Raumes, in dem die Vorrichtungen benützt werden, angebrachten Deckenhalterung mittels eines Verbindungsstücks des Auslegers befestigt ist. Dabei ist das Verbindungsstück mit dem Horizontalarm über ein Drehgelenk verbunden, so daß der Horizontalarm relativ zu dem Verbindungsstück gegenüber der Horizontalen geneigt werden kann. Außerdem weist der Ausleger ein mittels eines Gelenkstücks mit dem Horizontalarm verbundenes Befestigungsstück auf, an dem z. B. medizinische Geräte, wie eine Operationsleuchte oder ein Röntgenschutzschirm, befestigbar sind. Um die Möglichkeit zu schaffen, an dem Ausleger mehrere verschiedene Vorrichtungen zu befestigen, ist die Verbindung lösbar ausgeführt, so daß eine Sicherung der Verbindung erforderlich ist, um ein ungewolltes Lösen der Verbindung zu verhindern. Die bekannte Sicherung weist ein Sicherungselement auf, das in eine Nut des mit der Vorrichtung verbundenen Verbindungselementes eingreift, wodurch ein Herausziehen des Verbindungselements aus dem Befestigungsstück blockiert ist. Die Verbindung ist dabei derart ausgestaltet, das im montierten Zustand ein Teil der Gewichtskraft der Vorrichtung auf das Sicherungselement einwirkt.

Der bekannte Ausleger hat mehrere Nachteile. Im Laufe der Zeit kann das Sicherungselement aus der Nut herauswandern, so daß es nur noch teilweise in die Nut eingreift und im Falle einer Fehlfunktion die Sicherungskraft erheblich reduziert ist. Außerdem besteht, wenn das Sicherungselement nur teilweise in die Nut eingreift, bei einer großen Gewichtskraft der zu befestigenden Vorrichtung das Problem, daß durch die Belastung des Sicherungselementes im Bereich der Nut des Verbindungselementes mit einem Teil der Gewichtskraft der Vorrichtung die Belastung ausreicht, um daß Sicherungselement zu verbiegen bzw. das Verbindungselement im Bereich der Nut zu beschädigen. Dies kann auch dazu führen, daß das Sicherungselement bei einer Demontage, z. B. bei einer Demontage um eine andere medizinische Vorrichtung zu befestigen, nicht mehr oder nur schwer aus der Nut des Verbindungselementes entfernbar ist, so daß erhebliche Reparaturmaßnahmen erforderlich werden. Außerdem besteht die Gefahr, daß das Sicherungselement nicht gleichmäßig in die Nut des Verbindungselementes eingreift, wodurch eine geringere Sicherungskraft gegeben ist und die bereits diskutierten Probleme in entsprechender Form auftreten.

Mit der aus der DE 43 21 726 A1 bekannten Vorrichtung kann ein Gerät, z. B. eine Trockenhaube für den Friseurbedarf, an einem Halteelement, z. B. einem Stativ befestigt werden. Ein zylindrisches Befestigungsteil des Gerätes wird dadurch mit einem Halteteil des Halteelementes verbunden, dass am Halteelement ein mittels einer Rückstellfeder zurückstellbares Klemmelement vorgesehen ist, welches in eine Ringnut des Befestigungsteils eingreift.

Es ist daher die Aufgabe der Erfindung, einen Ausleger zu schaffen, bei dem die Funktionsfähigkeit des Sicherungsmechanismus sichergestellt ist und insbesondere das Zusammenwirken des Sicherungselementes mit dem Verbindungselement verbessert ist, und ferner ein Verfahren anzugeben, mittels dem diese sichere Verbindung erstellt werden kann.

Die Aufgabe wird durch einen Ausleger mit den Merkmalen des Anspruchs 1 und durch ein Verfahren mit den Merkmalen des Anspruchs 11 gelöst.

Der erfindungsgemäße Ausleger hat den Vorteil, daß das Sicherungselement zum Sichern der Befestigung des Verbindungselementes an dem Befestigungsstück von dem Federelement in der Nut des Verbindungselementes gehalten wird, wodurch eine zuverlässige Sicherung erreicht wird, bei der ein Herauswandern des Sicherungselementes aus der Nut des Verbindungselementes und eine ungleichmäßige Belastung des Sicherungselementes im Bereich der Nut verhindert ist, so daß der Ausleger eine größere Sicherheit aufweist und insbesondere für größere an dem Befestigungsstück angreifende Gewichtskräfte, d. h. für schwerere Vorrichtungen geeignet ist.

Durch die in den Ansprüchen 2 bis 10 angegebenen Maßnahmen sind vorteilhafte Weiterbildungen des im Anspruch 1 angegebenen Auslegers möglich.

In vorteilhafter Weise ist zumindest eine in die Sicherungshülse geschraubte Sicherungsschraube vorgesehen, an der sich das Federelement zumindest teilweise abstützt. Dadurch kann die Vorspannkraft des Federelementes eingestellt und insbesondere zusätzlich erhöht werden, wobei zusätzlich die Sicherungsschraube von dem Federelement mit einer Federkraft beaufschlagt wird, so daß zusätzlich ein ungewolltes Lösen der Sicherungsschraube verhindert ist.

Vorteilhaft ist es, daß die Sicherungsschraube mit dem Sicherungselement zusammenwirkt, um eine Verschiebung der Sicherungshülse relativ zu dem Sicherungselement zu blockieren. Dadurch wird verhindert, daß die Sicherungshülse bezüglich dem Befestigungsstück derart verschoben wird, daß das Sicherungselement und/oder weitere Sicherungs- bzw. Befestigungsmittel, wie z. B. ein Zylinderstift, ungesichert sind.

Vorteilhaft ist es, daß die Sicherungshülse eine Aussparung aufweist, in der das Sicherungselement und das Federelement teilweise angeordnet sind. Dadurch können die Lage des Sicherungselementes und/oder die Lage des Federelementes zusätzlich festgelegt werden, so daß insbesondere ein Verkippen des Sicherungselementes bzw. des Federelementes in einer Ebene senkrecht zu der Achse des Befestigungsstückes verhindert ist.

In vorteilhafter Weise ist das Federelement aus einem vorzugsweise metallischen Federband ausgebildet. Dabei ist es vorteilhaft, daß das Federelement einen ersten Abschnitt und einen zweiten Abschnitt aufweist, die in einem entspannten Zustand des Federelementes zumindest im wesentlichen senkrecht zueinander angeordnet sind. Dadurch ist ein einfach herzustellendes Federelement gegeben, das im montierten Zustand des Auslegers eine hohe Federkraft erzeugt.

Vorteilhaft ist es ferner, daß der erste Abschnitt länger als der zweite Abschnitt ist. Dadurch kann das Federelement vorteilhaft zwischen der Sicherungshülse und dem Sicherungselement eingeführt und zwischen diesem ausgerichtet werden. Insbesondere ist eine vorteilhafte Ausrichtung des Federelementes in der Aussparung der Sicherungshülse möglich.

Vorteilhaft ist es, daß der zweite Abschnitt so lang ausgebildet ist, daß er im montierten Zustand des Auslegers zumindest annähernd über die Unterkante der Sicherungshülse herausragt. Dadurch ist beim Montieren des Auslegers besonders einfach festzustellen, ob das Federelement richtig montiert ist. Außerdem wird dadurch für einen Monteur eine einfache Kontrollmöglichkeit geschaffen, um zu kontrollieren, ob das Federelement eingebaut ist, um die Sicherheit des Auslegers zu gewährleisten. Wesentlich ist dabei, daß zum Überprüfen, ob das Federelement eingebaut ist und ob dieses richtig angeordnet ist, keine Demontagearbeiten durchgeführt werden müssen, sondern dies allein durch Betrachten von außen möglich ist.

In vorteilhafter Weise sind der erste Abschnitt und der zweite Abschnitt mittels eines U-förmigen Mittelabschnitts verbunden, der zumindest teilweise an dem Sicherungselement anliegt. Dadurch wird die Montagelage des Federelementes in einer Richtung parallel zu der Achse des Befestigungsstückes festgelegt, so daß sich die Montage weiter vereinfacht.

Vorteilhaft ist es ferner, daß zumindest eine in die Sicherungshülse geschraubte Sicherungsschraube vorgesehen ist, die zumindest teilweise in den U-förmigen Mittelabschnitt des Federelementes eingreift. Dadurch wird das Federelement zusätzlich gesichert, wobei außerdem eine Sicherung der Sicherungshülse gegen eine Verschiebung in einer Richtung entlang der Achse des Befestigungsstückes gegeben ist.

Das erfindungsgemäße Verfahren gemäße Anspruch 11 hat den Vorteil, daß das Sicherungselement besonders tief in die Nut des Verbindungselementes geschoben wird, indem die Sicherungsfeder zwischen die Sicherungshülse und das Sicherungselement eingeschoben wird, wobei das Sicherungselement zusätzlich mit einer Haltekraft beaufschlagt wird, indem die Sicherungsfeder mittels der Sicherungshülse durch Verschieben dieser entlang des Befestigungsstücks vorgespannt wird.

Durch die in den Ansprüchen 12 und 13 angegebenen Maßnahmen sind vorteilhafte Weiterbildungen des im Anspruch 11 angegebenen Verfahrens möglich.

Vorteilhaft ist es, daß ferner eine Sicherungsschraube in die Sicherungshülse eingeschraubt wird, um eine Verschiebung der Sicherungshülse zu blockieren und die Sicherungsfeder zusätzlich zu spannen.

Außerdem ist es vorteilhaft, daß das Verbindungsmittel, das das Verbindungselement mit dem Befestigungsstück verbindet, durch eine Öffnung in der Sicherungshülse eingefügt wird.

Ausführungsbeispiele der Erfindung sind in der Zeichnung vereinfacht dargestellt und in der nachfolgenden Beschreibung näher erläutert. Es zeigen:
- Fig. 1: ein Ausführungsbeispiel eines erfindungsgemäßen Auslegers mit mehreren medizinischen Vorrichtungen, die mit dem Ausleger verbunden werden können, in einer teilweisen Explosionsdarstellung;
- Fig. 2: den in Fig. 1 mit II bezeichneten Ausschnitt;
- Fig. 3: einen Detail des erfindungsgemäßen Auslegers während der Montage des Federelementes;
- Fig. 4: ein Detail des erfindungsgemäßen Auslegers nach der Montage des Federelementes; und
- Fig. 5: ein Detail des erfindungsgemäßen Auslegers im montierten Zustand in einer teilweisen Schnittdarstellung.

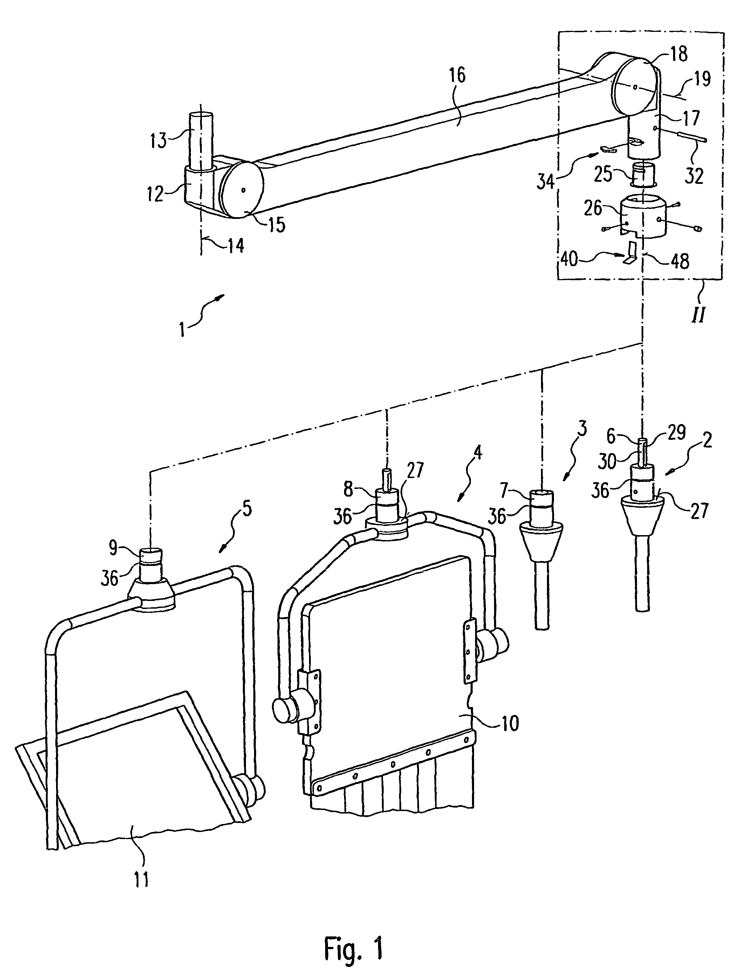

Fig. 1 zeigt einen Ausleger 1 zum aufgehängten Befestigen von Vorrichtungen 2 - 5. Hierfür weist jede der Vorrichtungen 2 - 5 ein Verbindungselement 6 - 9 auf. Der Ausleger 1 und die Verbindungselemente 6 - 9 sind Bestandteil eines Trägersystems, durch das vorzugsweise medizinische Vorrichtungen, wie z. B. eine Röntgenschutzabschirmung 10 und ein Bildschirm 11, austauschbar in einem Raum aufgehängt werden können, wobei die Aufhängung z. B. an einer deckenfesten Deckenhalterung, z. B. in Form einer Schienenhalterung, erfolgt.

Der Ausleger 1 weist ein Verbindungsstück 12 auf, das einen zylinderförmigen Bolzen 13 umfaßt, wobei der Ausleger 1 um die Drehachse 14 schwenkbar ist. Außerdem weist der Ausleger 1 einen mittels des Gelenkstücks 15 mit dem Verbindungsstück 12 verbundenen Horizontalarm 16 auf, der um die Drehachse 14 des Bolzens 13 schwenk- bzw. drehbar und bezüglich einer Horizontalebene, die senkrecht zu der Drehachse 14 orientiert ist, neigbar ist. Außerdem weist der Ausleger 1 ein Befestigungsstück 17 auf, das mittels eines Gelenkstücks 18 mit dem Horizontalarm 16 verbunden ist, so daß das Befestigungsstück 17 relativ zu dem Horizontalarm 16 um die Achse 19 des Gelenkstücks 18 schwenkbar ist.

Der Horizontalarm 16 kann als Federarm ausgebildet sein, wodurch das Gewicht einer Vorrichtung 2 - 5 kompensiert wird und die Vorrichtung 2 - 5 in der vorgegebenen Lage verbleibt.

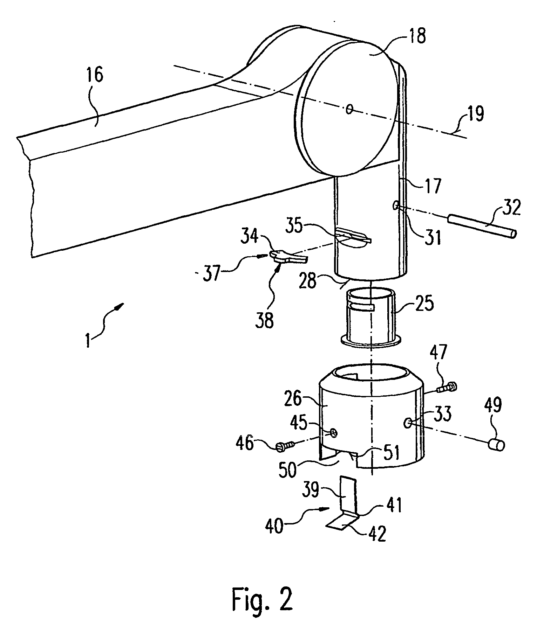

Die Erfindung wird im folgenden unter Bezugnahme auf die Fig. 2, die den in Fig. 1 mit II bezeichneten Ausschnitt zeigt, näher beschrieben. Bereits beschriebene Elemente sind in allen Figuren mit übereinstimmenden Bezugszeichen versehen, wodurch sich eine wiederholende Beschreibung erübrigt.

Die Schutzkappe 25 wird werkseitig für den Transport des Auslegers 1 in das Befestigungsstück 17 eingebaut, um den Ausleger 1 in einem Zustand zu liefern, der ähnlich dem ist, wie er zur Befestigung einer Vorrichtung 2 - 5 erforderlich ist, so daß durch die vorbereitende Demontage des Auslegers 1 dem Monteur nahegelegt wird, wie die Erstmontage des Auslegers 1 beim Verbinden mit einer Vorrichtung 2 - 5 zu erfolgen hat. Dadurch lassen sich Montagefehler, wie sie z. B. durch falsches Verstehen der Montageanleitung auftreten können, verhindern.

Im folgenden wird die Befestigung der Vorrichtung 6 bzw. 8 an dem Ausleger 1 beschrieben. Zunächst wird die Sicherungshülse 26 auf das Befestigungsstück 17 geschoben und anschließend wird das Verbindungselement 6, 8 der Vorrichtung 2, 4 in das Befestigungsstück 17 eingeschoben, wobei die Einschubtiefe durch den Anschlag 27, der an der Unterseite 28 des Befestigungsstücks 17 anschlägt, festgelegt ist. Dabei ist zu beachten, daß die längliche Aussparung 29 des Befestigungsstiftes 30 des Verbindungselementes 6 gegenüberliegend zu der Aussparung 31 des Befestigungsstücks 17 angeordnet ist. In einer geeigneten ersten Position der Sicherungshülse 26 kann das Verbindungsmittel 32, das in diesem Ausführungsbeispiel als Zylinderstift ausgebildet ist, durch die Öffnung 33 in der Sicherungshülse 26 in die Aussparung 31, durch die längliche Aussparung 29 des Verbindungselementes 6, 8 und in eine der Aussparung 31 gegenüberliegende Aussparung des Befestigungsstück 17 gefügt werden. Dadurch ist das Verbindungselement 6, 8 mit dem Befestigungsstück 17 mittels des Verbindungsmittels 32 verbunden, wodurch eine aufgehängte Befestigung der Vorrichtung 2, 4 an dem Ausleger 1 besteht.

Zur Sicherung dieser Befestigung wird das Sicherungselement 34, während sich die Sicherungshülse 26 in einer Position nahe der ersten Position befindet, durch eine Öffnung 35 des Befestigungsstücks 17 in eine Nut 36 des Verbindungselementes 6, 8 eingefügt. Das Sicherungselement 34 weist einen bogenförmigen Teil 37 und einen nasenförmigen Teil 38 auf. Der bogenförmige Teil 37 wird zumindest teilweise in die Nut 36 eingefügt, wobei der Krümmungsradius des bogenförmigen Teils 37 des Sicherungselements 34 an den Innenradius der umlaufenden Nut 36 angepaßt ist. Über den nasenförmigen Teil 38 des Sicherungselements 34 wird der erste Abschnitt 39 eines Federelementes 40 gelegt, wobei durch einen U-förmigen Mittelabschnitt 41 ein Anschlag des Federelements 40 an der Nase 34 gegeben ist. Nach Einschieben des Federelements 40 wird die Sicherungshülse 26 über den zweiten Abschnitt 42 des Federelementes 40 entlang des Befestigungsstücks 17 in eine zweite Position verschoben, wobei die Sicherungsfeder 40, indem der zweite Abschnitt 42 zurückgebogen wird, vorgespannt wird.

In der zweiten Position der Sicherungshülse 26 wird in die Gewindebohrung 45 der Sicherungshülse 26 eine Sicherungsschraube 46 eingeschraubt, so daß sich zum einen das Federelement 40 teilweise an der Sicherungsschraube 46 abstützt und zum anderen durch Eingreifen der Sicherungsschraube 45 in den U-förmigen Mittelabschnitt 41 des Federelementes 40 eine Verschiebung der Sicherungshülse 26 relativ zu dem Sicherungselement 34 bzw. relativ zu dem Befestigungsstück 17 blockiert ist. Ferner ist eine weitere Sicherungsschraube 47 vorgesehen, die durch eine Bohrung in der Sicherungshülse 26 geführt ist und in eine Gewindebohrung des Befestigungsstücks 17 eingreift, um die Sicherungshülse 26 zusätzlich und insbesondere gegen Verdrehen bezüglich der Achse 48 des Befestigungsstücks 17 zu sichern. Zum Verschließen der Öffnung 33 ist eine Kunststoffkappe 49 vorgesehen.

Als Alternative zur Befestigung der Vorrichtung 2 bzw. 4 mit dem Befestigungsstück 17 mittels des Verbindungsmittels 32 können auch andere Befestigungen vorgesehen sein, die in entsprechender Weise bei dem erfindungsemäßen Ausleger gesichert werden.

Beispielsweise können die Vorrichtungen 3 und 5 mit dem Ausleger 1 verbunden werden, indem durch eine der Öffnung 33 entsprechende Öffnung eine Schraube in das Verbindungselement 7, 9 geschraubt wird, wobei vorzugsweise mehrere derartige Schrauben vorzusehen sind. Ein Lösen der Schraube wird in entsprechender Weise durch die Sicherungshülse 26 verhindert, wie auch ein Verschieben des Verbindungsmittels 32 verhindert wird. Somit wird klar, daß die Sicherung der Befestigung des Verbindungselements 6- 9 mit dem Befestigungsstück 17 erfindungsgemäß unabhängig von der konkreten Ausgestaltung der Befestigung zum Einsatz kommen kann.

Die Sicherungshülse 26 weist eine annähernd rechteckige Aussparung 50 auf, wobei die Feder 40 im Bereich der Aussparung 50 zwischen die Sicherungshülse 26 und das Befestigungsstück 17 eingeführt wird. Dadurch ist bei einer Montage leichter zur erkennen, wo die Feder 40 zu montieren ist. Außerdem wird durch die Aussparung 50 eine Unterkante 51 der Sicherungshülse 26 definiert. Der zweite Abschnitt 42 des Federelementes 40 ist so lang ausgebildet, daß er im montierten Zustand des Auslegers 1 zumindest annähernd über die Unterkante 51 der Sicherungshülse 26 herausragt, wodurch von außen leicht zu erkennen ist, ob das Federelement 40 korrekt angebracht worden ist. Somit wird durch die Aussparung 50 und durch die richtige Wahl der Länge des zweiten Abschnitts 42 des Federelementes 40 eine einfache Möglichkeit geschaffen, die erfindungsgemäße Sicherung zu überprüfen.

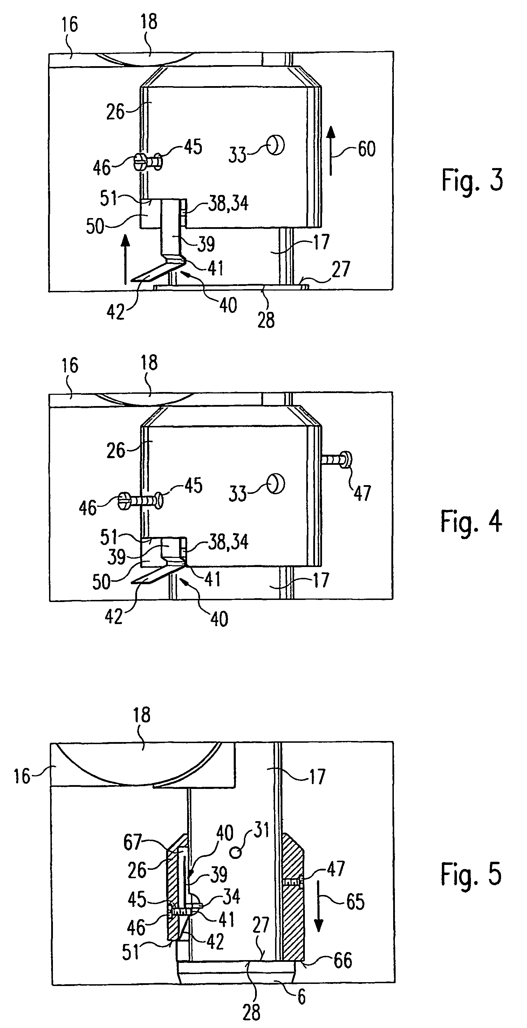

Fig. 3 zeigt ein Detail des Auslegers 1, wobei sich die Sicherungshülse 26 in der ersten Position befindet.

Um die Sicherungshülse 26 auf das Befestigungsstück 17 des Auslegers 1 in die erste Position aufzubringen, ist es entlang des Befestigungsstücks 17 in der Richtung 60 auf den Horizontalarm 16 zu bewegt worden. Durch die Aussparung 50 ist in dieser Stellung das Sicherungselement 34 durch die Öffnung 35 des Befestigungsstücks 17 in die Nut 36 des Verbindungselements 6 eingefügt worden. In der Fig. 3 ist der nasenförmige Teil 38 des Sicherungselementes 34 zum Teil sichtbar. Bei entfernter Sicherungsschraube 46 wird das Federelement 40 über den nasenförmigen Teil 38 des Sicherungselementes 34 zwischen die Sicherungshülse 26 und das Befestigungsstück 17 eingeschoben bis der U-förmige Mittelabschnitt 41 an dem nasenförmigen Teil 38 des Sicherungselementes 34 anliegt, wie es in der Fig. 4 gezeigt ist.

Der zweite Abschnitt 42 des Federelementes 40 ist gegenüber dem ersten Abschnitt 39 im wesentlichen senkrecht angeordnet, so daß der zweite Abschnitt 42 im wesentlichen senkrecht von dem Befestigungsstück 17 absteht.

Wie in Fig. 5 gezeigt, wird nachfolgend die Sicherungshülse 26 in der Richtung 65, die entgegen der Richtung 60 ist, entlang des Befestigungsstücks 17 in eine zweite Position verschoben, wobei der zweite Abschnitt 42 des Federelementes 40 durch Einwirkung der Unterkante 51 der Sicherungshülse 26 zu dem Befestigungsstück 17 gebogen wird, um das Federelement 40 vorzuspannen. In der in Fig. 5 gezeigten zweiten Position liegt die Gewindebohrung 45 von dem Sicherungselement 34 aus betrachtet auf der Seite des zweiten Abschnitts 42 des Federelements 40.

Daher greift in dieser Position die Sicherungsschraube 46 beim Einschrauben in die Gewindebohrung 45 in den U-förmigen Mittelabschnitt 41 des Federelementes 40 ein, wodurch eine Verschiebung der Sicherungshülse 26 entgegen der Richtung 65 entlang des Befestigungsstücks 17 blockiert wird. Da die Sicherungshülse 26 an der Unterkante 66 an dem Anschlag 27 des Verbindungselements 6 anliegt, ist außerdem eine Verschiebung der Sicherungshülse 26 in der Richtung 65 entlang des Befestigungsstücks 17 blockiert. Somit ist die Verschiebung der Sicherungshülse 26 entlang des Befestigungsstücks 17 in beiden Richtungen blockiert und ein Lösen des Sicherungselements 34 und ggf, des Verbindungsmittels 32 wird unter allen Umständen verhindert.

Um die Aufnahme des Sicherungselementes 34 und des Federelementes 40 zu ermöglichen, weist die Sicherungshülse 26 eine Aussparung 67 auf, deren Breite etwas größer als die Breite des bandförmig ausgebildeten Federelementes 40 ist, so daß das Federelement 40 beim Einfügen in die Aussparung 67 geführt wird. Somit ist durch die Aussparung 67 die Lage des bandförmigen Federelementes 40 vorgegeben und insbesondere wird eine seitliche Verschiebung des Federelementes 40 auf Dauer zuverlässig verhindert.

## Patentansprüche

1. Ausleger (1), insbesondere schwenk- und neigbarer Ausleger für ein Trägersystem, zum aufgehängten Befestigen von vorzugsweise medizinischen Vorrichtungen (2 - 5) mittels eines Verbindungselements (6 - 9) an einem Befestigungsstück (17) des Auslegers (1) mit
einem Sicherungselement (34), das durch eine Öffnung (35) des Befestigungsstücks (17) geführt ist und die Befestigung des Verbindungselements (6 - 9) an dem Befestigungsstück (17) durch Eingreifen in eine Nut (36) des Verbindungselementes (6 - 9) sichert,
einer Sicherungshülse (26), die das Befestigungsstück (17) und das Verbindungselement (6 - 9) zumindest teilweise umgibt und das Sicherungselement (34) sichert und
einem Federelement (40), das sich zumindest teilweise an der Sicherungshülse (26) abstützt, um das Sicherungselement (34) mittels einer Vorspannkraft in der Nut (36) des Verbindungselementes (6 - 9) zu halten,
**dadurch gekennzeichnet,**
**daß** das Federelement (40) zumindest teilweise zwischen die Sicherungshülse (26) und das Sicherungselement (34) eingeschoben ist.

2. Ausleger nach Anspruch 1,
**dadurch gekennzeichnet,**
**daß** zumindest eine in die Sicherungshülse (26) geschraubte Sicherungsschraube (46) vorgesehen ist, an der sich das Federelement (40) zumindest teilweise abstützt.

3. Ausleger nach Anspruch 2,
**dadurch gekennzeichnet,**
**daß** die Sicherungsschraube (46) mit dem Sicherungselement (34) zusammenwirkt, um eine Verschiebung der Sicherungshülse (26) relativ zu dem Sicherungselement (34) zu blockieren.

4. Ausleger nach einem der Ansprüche 1 bis 3,
**dadurch gekennzeichnet,**
**daß** die Sicherungshülse (26) eine Aussparung (67) aufweist, in der das Sicherungselement (34) und das Federelement (40) teilweise angeordnet sind.

5. Ausleger nach einem der Ansprüche 1 bis 4,
**dadurch gekennzeichnet,**
**daß** das Federelement (40) aus einem vorzugsweise metallischen Federband ausgebildet ist.

6. Ausleger nach Anspruch 5,
**dadurch gekennzeichnet,**
**daß** das Federelement (40) einen ersten Abschnitt (39) und einen zweiten Abschnitt (42) aufweist, die in einem entspannten Zustand des Federelementes (40) vorzugsweise zumindest im wesentlichen senkrecht zueinander angeordnet sind.

7. Ausleger nach Anspruch 6,
**dadurch gekennzeichnet,**
**daß** der erste Abschnitt (39) länger als der zweite Abschnitt (42) ist.

8. Ausleger nach Anspruch 6 oder 7,
**dadurch gekennzeichnet,**
**daß** der zweite Abschnitt (42) so lang ausgebildet ist, daß er im montierten Zustand des Auslegers (1) zumindest annähernd über eine Unterkante (51) der Sicherungshülse (26) herausragt.

9. Ausleger nach einem der Ansprüche 6 bis 8,
**dadurch gekennzeichnet,**
**daß** der erste Abschnitt (39) und der zweite Abschnitt (42) mittels eines U-förmigen Mittelabschnitts (41) verbunden sind, der zumindest teilweise an dem Sicherungselement (34) anliegt.

10. Ausleger nach Anspruch 9,
**dadurch gekennzeichnet,**
**daß** zumindest eine in die Sicherungshülse (26) geschraubte Sicherungsschraube (46) vorgesehen ist, die zumindest teilweise in den U-förmigen Mittelabschnitt (41) des Federelementes (40) eingreift.

11. Verfahren zur Montage einer vorzugsweise medizinischen Vorrichtung (2-5) mittels eines Verbindungselementes (6-9) an einem Ausleger (1), insbesondere einem schwenk- und neigbaren Ausleger für ein Trägersystem, in einer aufgehängten Befestigung mit folgenden Verfahrensschritten:
a) Aufbringen einer Sicherungshülse (26) auf ein Befestigungsstück (17) des Auslegers (1) in einer ersten Position,
b) Einschieben des Verbindungselementes (6-9) in das Befestigungsstück (17),
c) Verbinden des Befestigungsstücks (17) mit dem Verbindungselement (6-9) durch Einfügen eines Verbindungsmittels (32), insbesondere eines Zylinderstiftes,
d) Einfügen eines Sicherungselementes (34) in eine Nut (36) des Verbindungselementes (6-9) durch eine Öffnung (35) des Befestigungsstücks (17),
e) zumindest teilweises Einschieben eines Federelements (40) zwischen die Sicherungshülse (26) und das Sicherungselement (34)
und nachfolgend
f) Verschieben der Sicherungshülse (26) entlang des Befestigungsstücks (17) in eine zweite Position, wobei das Federelement (40) vorgespannt wird.

12. Verfahren nach Anspruch 11,
**gekennzeichnet durch**,
den dem Schritt f) nachfolgendem Schritt g) Einschrauben einer Sicherungsschraube (46) in die Sicherungshülse (26), um eine Verschiebung der Sicherungshülse (26) zu blockieren und das Federelement (40) zusätzlich zu spannen.

13. Verfahren nach Anspruch 11 oder 12,
**dadurch gekennzeichnet,**
**daß** in Schritt c) das Verbindungsmittel (32) durch eine Öffnung (33) in der Sicherungshülse (26) eingefügt wird.

## Claims

1. An extension arm (1), particularly a pivotable and inclinable extension arm for a supporting system, for the suspended attachment of preferably medical devices (2 - 5) by means of a connecting element (6 - 9) to an attachment piece (17) of the extension arm (1) having a securing element (34), which is guided through an opening (35) in the attachment piece (17) and secures the attachment of the connecting element (6 - 9) on the attachment piece (17) by engaging in a groove (36) in the connecting element (6 - 9),
a securing bush (26), which surrounds the attachment piece (17) and the connecting element (6 - 9) at least partially and secures the securing element (34) and
a spring element (40), which is at least partially supported on the securing bush (26) in order to hold the securing element (34) in the groove (36) in the connecting element (6 - 9) by means of a pre-tension force,
**characterised in that**
the spring element (40) is pushed at least partially in between the securing bush (26) and the securing element (34).

2. An extension arm according to Claim 1
**characterised in that**
at least one securing screw is provided (46), which is screwed into the securing bush (26) and on which the spring element (40) is at least partially supported.

3. An extension arm according to Claim 1,
**characterised in that**
the securing screw (46) cooperates with the securing element (34) to block a displacement of the securing bush (26) relative to the securing element (34).

4. An extension arm according to one of Claims 1 to 3,
**characterised in that**
the securing bush (26) has a cutout (67) in which the securing element (34) and the spring element (40) are partially arranged.

5. An extension arm according to one of Claims 1 to 4,
**characterised in that**
the spring element (40) is constructed from a preferably metal spring strip.

6. An extension arm according to Claim 5,
**characterised in that**
the spring element (40) has a first portion (39) and a second portion (42) which, in a relaxed condition of the spring element (40), are preferably arranged at least substantially perpendicular to one another.

7. An extension arm according to Claim 6,
**characterised in that**
the first portion (39) is longer than the second portion (42).

8. An extension arm according to Claim 6 or 7,
**characterised in that**
the second portion (42) is constructed to be such a length that it projects at least approximately over a lower edge (51) of the securing bush (26) in the assembled condition of the extension arm (1).

9. An extension arm according to one of Claims 6 to 8,
**characterised in that**
the first portion (39) and the second portion (42) are connected by means of a U-shaped middle portion (41) which abuts at least partially against the securing element (34).

10. An extension arm according to Claim 9,
**characterised in that**
at least one securing screw (46) is provided, which is screwed into the securing bush (26) and engages at least partially in the U-shaped middle portion (41) of the spring element (40).

11. A process for assembling a preferably medical device (2 - 5) by means of a connecting element (6 - 9) on an extension arm (1), particularly a pivotable and inclinable extension arm for a supporting system, in a suspended attached position, having the following process steps:
a) assembling a securing bush (26) on an attachment piece (17) of the extension arm (1) in a first position;
b) pushing the connecting element (6 - 9) into the attachment piece (17);
c) connecting the attachment piece (17) to the connecting element (6 - 9) by inserting a connecting means (32), particularly a cylinder pin;
d) inserting a securing element (34) into a groove (36) in the connecting element (6 - 9) through an opening (35) in the attachment piece (17);
e) pushing a spring element (40) at least partially in between the securing bush (26) and the securing element (34);
and then
f) displacing the securing bush (26) along the attachment piece (17) into a second position, the spring element (40) being pre-tensioned.

12. A process according to Claim 11,
**characterised by**
the step g) which follows step f), screwing a securing screw (46) into the securing bush (26) in order to block displacement of the securing bush (26) and additionally tension the spring element (40).

13. A process according to Claim 11 or 12,
**characterised in that**
in step c), the connecting means (32) is inserted through an opening (33) in the securing bush (26).

## Revendications

1. Bras en console (1), notamment bras en console pouvant pivoter et être incliné pour un système de support, pour la fixation à l'état suspendu de dispositifs (2-5), de préférence médicaux, à l'aide d'un élément de liaison (6-9) à un élément de fixation (17) du bras en console (1), comportant
un élément de blocage (34), qui est guidé par une ouverture (35) de l'élément de fixation (17) et garantit la fixation de l'élément de liaison (6-9) à l'élément de fixation (17) par engagement dans une gorge (36) de l'élément de liaison (6-9),
une douille de blocage (26) qui entoure au moins en partie l'élément de fixation (17) et l'élément de liaison (9) et qui bloque l'élément de blocage (34), et
un élément de ressort (40), qui prend appui au moins en partie sur la douille de blocage (26) de manière à maintenir l'élément de blocage (34) à l'aide d'une force de précontrainte dans la gorge (36) de l'élément de liaison (6-9),
**caractérisé en ce**
**que** l'élément de ressort (40) est inséré au moins partiellement entre la douille de blocage (26) et l'élément de blocage (34).

2. Bras en console selon la revendication 1, **caractérisé en ce qu'**il est prévu au moins une vis de blocage (46) qui est vissée dans la douille de blocage (26) et sur laquelle l'élément de ressort (40) prend appui au moins partiellement.

3. Bras en console selon la revendication 2,
**caractérisé en ce**
**que** la vis de blocage (46) coopère avec l'élément de blocage (34) pour empêcher un déplacement de la douille de blocage (26) par rapport à l'élément de blocage (34).

4. Bras en console selon l'une des revendications 1 à 3, **caractérisé en ce**
**que** la douille de sécurité (26) comporte un évidement (67), l'élément de blocage (34) et l'élément de ressort (40) sont disposés partiellement.

5. Bras en console selon l'une des revendications 1 à 4, **caractérisé en ce que** l'élément de ressort (40) est constitué par une bande de ressort de préférence métallique.

6. Bras en console selon la revendication 5,
**caractérisé en ce**
**que** l'élément de ressort (40) possède une première section (39) et une seconde section (42), qui sont disposées de préférence au moins sensiblement perpendiculairement l'une à l'autre lorsque l'élément de ressort (40) est à l'état détendu.

7. Bras en console selon la revendication 6,
**caractérisé en ce**
**que** la première section (39) est plus longue que la seconde section (42).

8. Bras en console selon la revendication 6 ou 7,
**caractérisé en ce**
**que** la seconde section (42) est agencée avec une longueur telle que lorsque le bras en console (1) est à l'état monté, cette section ressort au moins approximativement au-dessus d'un bord inférieur (51) de la douille de blocage (26).

9. Bras en console selon l'une des revendications 6 à 8, **caractérisé en ce**
**que** la première section (39) et la seconde section (42) sont réunies au moyen d'une section médiane en forme de U (41), qui s'applique au moins partiellement contre l'élément de blocage (34).

10. Bras en console selon la revendication 9,
**caractérisé en ce**
**qu'**il est prévu au moins une vis de blocage (46), qui est vissée dans la douille de blocage (26) et s'engage au moins partiellement dans la section médiane en forme de U (41) de l'élément de ressort (40).

11. Procédé pour le montage d'un dispositif de préférence médical (2-5) à l'aide d'un élément de liaison (6-9) sur un bras en console (1), notamment un bras en console pouvant pivoter et être incliné, pour un système de support, dans une fixation suspendue, ou au moyen des étapes opératoires suivantes :
a) montage d'une douille de blocage (26) sur un élément de fixation (17) du bras en console (1) dans une première position,
b) insertion de l'élément de liaison (6-9) dans l'élément de fixation (17),
c) réunion de l'élément de fixation (17) à l'élément de liaison (6-9) par insertion d'un moyen de liaison (32), notamment d'une tige cylindrique,
d) insertion d'un élément de blocage (34) dans une gorge (36) de l'élément de liaison (6-9) par une ouverture (35) de l'élément de fixation (17),
e) insertion au moins partielle d'un élément de ressort (40) entre la douille de blocage (26) et l'élément de blocage (34), et ensuite
f) déplacement de la douille de blocage (26) le long de l'élément de fixation (17) jusque dans une seconde position, l'élément de ressort (40) étant précontraint.

12. Procédé selon la revendication 11,
**caractérisé par**
l'étape g) qui succède à l'étape f) et inclut le vissage d'une vis de blocage (46) dans la douille de blocage (26) pour bloquer une liaison de la douille de blocage (26) et bander de façon supplémentaire l'élément de ressort (40).

13. Procédé selon la revendication 11 ou 12, **caractérisé en ce que** lors de l'étape c), le moyen de liaison (32) est inséré dans une ouverture (33) formée dans la douille de blocage (26).
